# EUROPEAN PATENT APPLICATION

(11) **EP 4 269 181 A1**
(43) Date of publication of application: **01.11.2023**
(21) Application number: 23166910.2
(22) Date of filing: 06.04.2023
(51) Int. Cl.: B60R 16/02

(54) **WORK VEHICLE**

(30) Priority: 27.04.2022 JP 2022073466; 31.01.2023 JP 2023012872
(71) Applicant: Yanmar Holdings Co., Ltd., Osaka-shi, Osaka (JP)
(72) Inventor: NAKAGAWA, Yohei, Okayama (JP); NOMOTO, Soshi, Okayama (JP)
(74) Representative: Novagraaf International SA

(57) **Abstract**

[Problem] To provide a work vehicle with a controller to control a motor, which is capable of being appropriately located in the work vehicle.

[Solution] An exemplary work vehicle includes a driver's seat, a steering wheel located in front of the driver's seat, a steering shaft connected to the steering wheel, a motor to rotate the steering shaft, and a controller to control the motor. The controller is located on a partition below the driver's seat that constitutes a cockpit in which a driver gets.

## Description

### TECHNICAL FIELD

The present disclosure relates to a work vehicle.

### BACKGROUND ART

Patent Document 1 discloses a work vehicle capable of automatically steering a traveling machine so that it travels along a target traveling route. The automatic steering mechanism provided with the work vehicle has a motor that rotatively drives the steering shaft.

### PRIOR ART DOCUMENT

### PATENT DOCUMENT

Patent Document 1: Japanese Patent Laid-open Publication No. 2020-100231

### SUMMARY OF INVENTION

### TECHNICAL PROBLEM

In a configuration with a motor that rotatively drives the steering shaft, a controller that controls the motor is required. It is concerned that the placement of such a controller in a work vehicle may, for example, reduce the operability of pedals and deteriorate the visibility of the driver (operator) sitting on the driver's seat.

In view of the foregoing, an object of the present disclosure is to provide a work vehicle with a controller to control a motor, which is capable of being appropriately located in the work vehicle.

### SOLUTION TO PROBLEM

An exemplary work vehicle of the present disclosure includes: a driver's seat; a steering wheel located in front of the driver's seat; a steering shaft connected to the steering wheel; a motor to rotate the steering shaft; and a controller to control the motor. The controller is located on a partition below the driver's seat that constitutes a cockpit in which a driver gets.

### ADVANTAGEOUS EFFECTS OF INVENTION

According to the exemplary disclosure, a work vehicle with a controller to control a motor, which is capable of being appropriately located in the work vehicle, is provided.

### BRIEF DESCRIPTION OF DRAWINGS

FIG. 1 is a schematic side view of a configuration of a tractor,
FIG. 2 is a schematic plan view of a configuration of the tractor,
FIG. 3 is a block diagram illustrating a configuration associated with an automatic steering of the tractor,
FIG. 4 is a diagram illustrating an example of a method of setting a reference line,
FIG. 5 is a schematically perspective view of a configuration around a cockpit of the tractor,
FIG. 6 is a schematically perspective view of a configuration of another embodiment of the floor cover,
FIG. 7 is an enlarged schematically perspective view around a first controller illustrating a configuration with the floor cover removed,
FIG. 8 is a schematically perspective view of a mounting structure for mounting the first controller on a floor,
FIG. 9 is an exploded schematically perspective view of a part of the configuration shown in FIG. 8,
FIG. 10 is an explanatory diagram of a mounting location of the first controller according to a first alternative embodiment,
FIG. 11 is an explanatory diagram of a mounting location of the first controller according to a second alternative embodiment,
FIG. 12 is schematically cross sectional view taken along line XII-XII shown in FIG. 11,
FIG. 13 is a perspective view of the tractor with a cabin specification,
FIG. 14 is a schematically perspective view of a configuration around the first controller of the tractor with the cabin specification,
FIG. 15 is a schematically side view of a configuration around the first controller of the tractor with the cabin specification,
FIG. 16 is a schematically perspective view of the tractor according to a fourth alternative embodiment of the tractor,
FIG. 17 is a diagram with a part of components (cover) removed from FIG. 16,
FIG. 18 is an explanatory diagram of a mounting location of the second controller according to the fourth alternative embodiment,
FIG. 19 is an enlarged plan view around the second controller of the tractor according to the fourth alternative embodiment,
FIG. 20 is a schematically perspective view of the mounting structure or the second controller of the tractor according to the fourth alternative embodiment, and
FIG. 21 is an exploded perspective view of a part of the mounting structure shown in FIG. 20.

### DESCRIPTION OF EMBODIMENTS

Now, embodiments of the present disclosure are described below with reference to the drawings. In the present embodiment, a tractor is described as an example of a working vehicle. However, the work vehicle may be a work vehicle other than a tractor, such as various types of harvesters, rice transplanters, combine harvesters, civil engineering and construction work machine, snowplows, etc.

In the present specification, directions are defined as follows. An orientation in which the tractor as the work vehicle advances during work is defined as "front", and an opposite orientation is defined as "rear". A right orientation with respect to the advancing direction of the tractor is defined as "right", and a left orientation with respect to the advancing direction of the tractor is defined as "left". A direction perpendicular to both a front-rear direction and a right-left direction of the tractor is defined as an up-down direction. In the present embodiment, "down" is along the gravity direction and "up" is along the anti-gravity direction. A plane perpendicular to the up-down direction is defined as a horizontal plane, and a direction along the horizontal plane is defined as a horizontal direction. It should be noted that the directions defined above are only for the purpose of illustration, so an actual direction and orientation of each of components are not limited thereto.

### 1. Summary of Work Vehicle

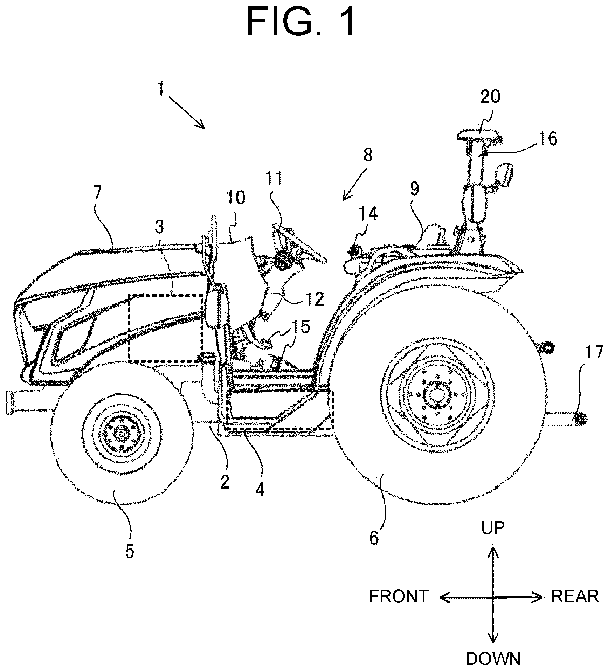

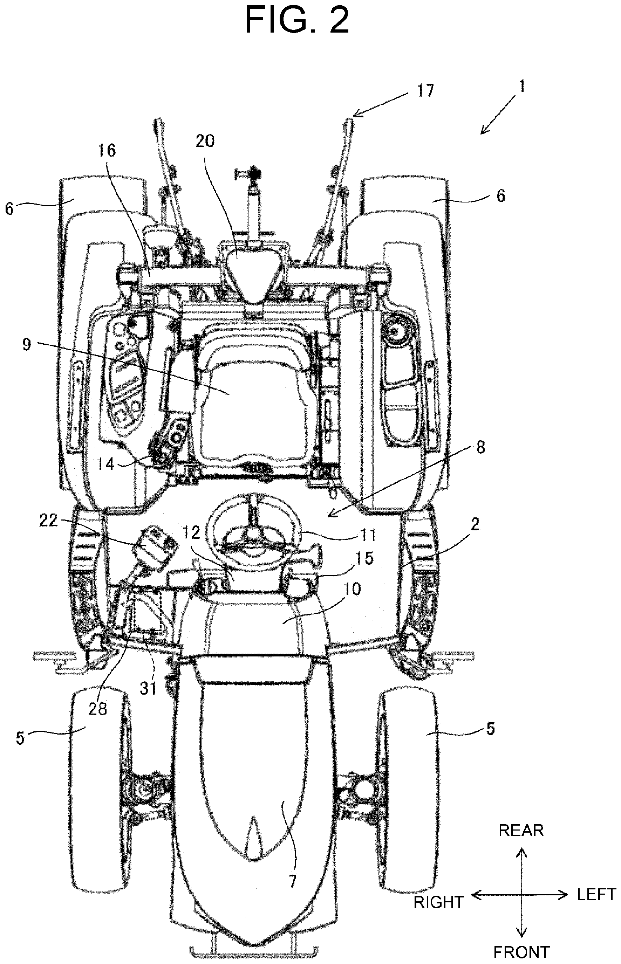

FIG. 1 is a schematic side view of a configuration of a tractor 1 according to the present embodiment. FIG. 2 is a schematic plan view of a configuration of the tractor 1. As shown in FIG. 1, the tractor 1 includes a vehicle body 2, an engine 3, and a drive housing 4.

As shown in FIGS. 1 and 2, a pair of front wheels 5 on each side are located at a front portion of the vehicle body 2. A pair of rear wheels 6 on each side are located at a rear portion of the vehicle body 2. The vehicle body 2 can travel by the front wheels 5 and rear wheels 6. Namely, the tractor 1 according to the present embodiment is a wheel type tractor. However, the tractor 1 may be a crawler type tractor.

The engine 3 is located at the front portion of the vehicle body 2 with covered by a hood 7. The engine 3 is a driving source of the tractor 1. In the present embodiment, the engine 3 is a diesel engine. The engine 3 may be a gasoline engine. The tractor 1 may be driven by another driving source, such as an electric motor, instead of the engine.

The drive housing 4 is located in the rear of the engine 3 and below a cockpit 8. The drive housing 4 includes a transmission case. A power transmission unit (not shown) is located inside the drive housing 4. The rotational power of the engine 3 is transmitted to at least one of the front wheels 5 and rear wheels 6 via a power transmission unit in the drive housing 4.

The cockpit 8 is located in the rear of the engine 3 in the vehicle body 2. The driver (operator) gets on the cockpit 8. The cockpit 8 has a driver's seat 9 and a front panel 10. Namely, the tractor 1 is equipped with the driver's seat 9. The driver sits on the driver's seat 9. The tractor 1 is also equipped with the front panel 10.

The front panel 10 is located in front of the driver's seat 9. The front panel 10 is equipped with a steering wheel (handle) 11. Namely, the tractor 1 is equipped with the steering wheel 11 which is located in front of the driver's seat 9. The front panel 10 extends from a front end of the cockpit 8 toward the driver's seat 9 (i.e., toward the rear side). The front panel 10 is also equipped with a meter display to indicate a speed of the tractor 1 and the like The steering wheel 11 is located in the rear of the meter display and in front of the driver's seat 9.

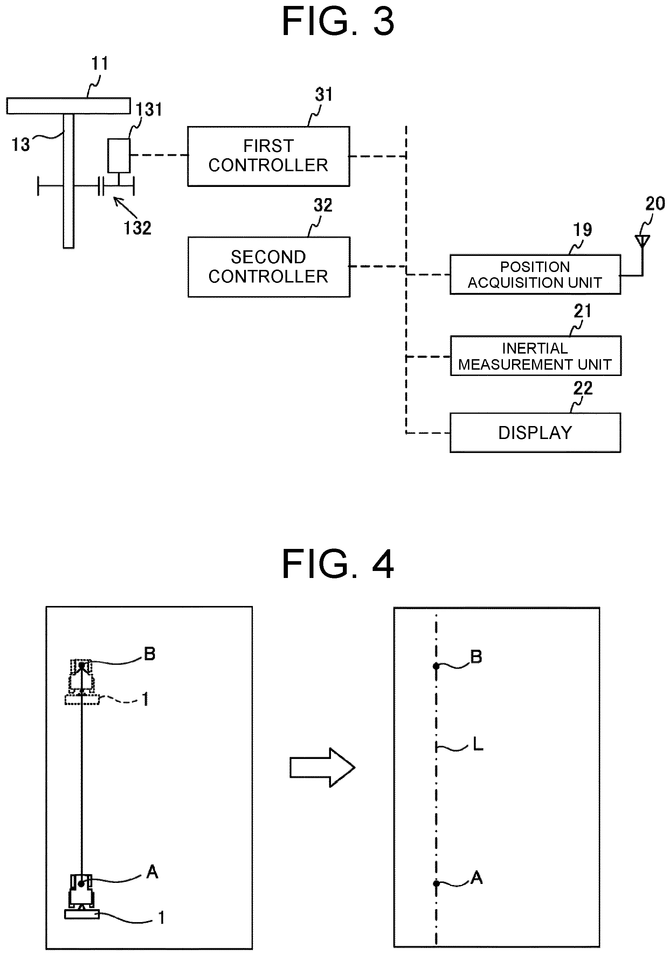

The steering wheel 11 is operated by the driver sitting on the driver's seat 9. In detail, the steering wheel 11 is rotatably supported by a steering shaft 13 which is installed in a steering column 12 of the front panel 10 (see FIG. 3). The orientation of the front wheels 5 can be changed by rotating the steering wheel 11.

The cockpit 8 is further provided with various operation levers 14 and pedals 15 which are operated by the driver, for example. The various operation levers 14 may include a main shift lever, a sub-shift lever, and a work lever, for example. The various pedals 15 may include an accelerator pedal, a brake pedal, and a clutch pedal, for example.

In the present embodiment, a ROPS frame 16 is provided in the rear of the driver's seat 9. The ROPS frame 16 allows the tractor 1 to protect the driver when overturned. The tractor 1 may have a cabin specification in which the driver's seat 9 is covered by a cabin, instead of a ROPS specification in which the ROPS frame 16 is provided.

In the rear of the vehicle body 2, there is provided a work machine coupling 17 which is composed of a three-point linkage mechanism or the like. A work machine can be attached to the work machine coupling 17. The work machine may be, for example, a cultivator, plow, fertilizer applicator, pesticide sprayer, harvesting equipment, or harvester. A lifting device (not shown) with a hydraulic system such as a lifting cylinder is provided in the rear of the vehicle body 2. The lifting device can lift the work machine by lifting the work machine coupling 17. The power generated by the engine 3 can be transmitted to the work machine being towed via the power transmission unit in the drive housing 4 and a power take-off shaft (PTO shaft; not shown) located in the rear of the vehicle body 2.

The tractor 1 can be set to be an automatic steering in which steering is autonomously performed to follow a predetermined path. FIG. 3 is a block diagram illustrating a configuration associated with the automatic steering of the tractor 1. In addition to steering, the tractor 1 may be configured to autonomously control at least one of a vehicle speed and work by the work machine.

As shown in FIG. 3, the tractor 1 is equipped with a steering shaft 13 and a motor 131. The steering shaft 13 is connected to the steering wheel 11. The motor 131 rotates the steering shaft 13.

In detail, the motor 131 can control a rotation direction, rotation speed, rotation angle, etc.. The motor 131 is connected to the steering shaft 13 via a gear mechanism 132. The gear mechanism 132 includes a gear provided on the steering shaft 13 to rotate along with the steering shaft 13 and a gear attached to a rotary shaft of the motor 131 to rotate along with the rotary shaft of the motor 131. When the rotary shaft of the motor 131 rotates, the steering shaft 13 automatically rotates via the gear mechanism 132. The motor 131 and the gear mechanism 132 are installed in the steering column 12, for example.

As shown in FIG. 3, the tractor 1 is equipped with a first controller 31 and a second controller 32. Each of the first controller 31 and the second controller 32 is a computer device including, for example, an arithmetic device, an input/output, and a storage device. The arithmetic device is a processor or a microprocessor, for example. The storage device is a main memory such as a ROM (Read Only Memory) and an RAM (Random Access Memory). The storage device may further include an auxiliary storage device such as an HDD (Hard Disk Drive) or an SSD (Solid State Drive). Various programs, data and the like are stored In the storage device. The arithmetic device reads out the various programs from the storage device and executes them.

In the present embodiment, the controller associated with the automatic steering consists of two controllers, the first controller 31 and the second controller 32, but a configuration of the controller is not limited thereto. The number of controllers associated with the automatic steering may be one or three or more. For example, the first controller 31 and the second controller 32 may be unified as one.

The first controller 31 is electrically connected to the motor 131 to control the motor 131. The first controller 31 is a driver of the motor 131. In detail, the first controller 31 controls the motor 131 in accordance with instructions from the second controller 32 which is electrically connected to the first controller 31. The first controller 31 receives control instructions from the second controller 32, further processes the control instructions, and determines the amount of power to be supplied to the motor 131. The first controller 31 supplies to the motor 131 power according to the determined amount of power. As described above, since driving force of motor 131 is transmitted to the steering shaft 13 via the gear mechanism 132, the orientation of the front wheels 5 can be controlled by controlling the motor 131.

The second controller 32 is a main controller to perform a control associated with the automatic steering. The second controller 32 is a controller for the automatic steering. There are connected to the second controller 32 the position acquisition unit 19, an inertial measurement unit 21, and display 22.

The position acquisition unit 19 acquires a position of the tractor 1, for example, as latitude and longitude information using positioning signals received from a positioning satellite by a positioning antenna 20. The position acquisition unit 19 outputs position information of the tractor 1 to the second controller 32. The position acquisition unit 19 may perform positioning using, for example, a known RTK-GNSS (Real Time Kinematic GNSS) method after receiving a positioning signal from a reference station (not shown) in an appropriate manner. For example, the position acquisition unit 19 may perform positioning using a Differential GNSS (DGNSS) method. In the present embodiment, the positioning antenna 20 is attached to the ROPS frame 16. The attaching position of the positioning antenna 20 may be changed as appropriate.

The inertial measurement unit 21 includes a 3 -axis angular speed sensor and a 3-way acceleration sensor. The inertial measurement unit 21 outputs measured information to the second controller 32. The inertial measurement unit 21 makes it possible to measure inertial information such as a yaw angle, a pitch angle, and a roll angle of the vehicle body 2.

The display 22 displays information in accordance with instructions from the second controller 32 as appropriate. The display 22 displays, for example, information and error information about the automatic steering of the tractor 1. In the present embodiment, the display 22 also functions as a manipulation unit to which the driver inputs instructions. Namely, the display 22 can be referred to as a manipulation display device. The function as the manipulation unit can be realized by providing operation buttons or a touch panel on the display 22, for example. By using function as the manipulation unit of the display 22 as a controller, the driver can set a route for the automatic steering and perform operations associated with the automatic steering.

The second controller 32 performs a start and an end of the automatic steering in accordance with instructions from the driver using the manipulation function of the display 22, for example. The second controller 32 obtains a position and orientation of the vehicle body 2 of the tractor 1 based on information acquired from the position acquisition unit 19 and the inertial measurement unit 21,for example. The second controller 32 outputs control instructions associated with the automatic steering to the first controller 31 according to a relationship between the obtained position of the vehicle body 2, etc. and the predetermined route for the autonomous traveling, for example. The second controller 32 receives GNSS positioning information or information about the vehicle body 2 from the position acquisition unit 19 or the inertial measurement unit 21, etc., performs calculations associated with the automatic steering and sends control instructions for the motor 131 to the first controller 31. The second controller 32 receives operation information on the motor 131 from the first controller 31 and performs the following calculations (calculations for feedback control).

Here, the automatic steering, which is performed by the tractor 1 according to the present embodiment, is described in brief below. At the beginning of performing the automatic steering, a reference line L is first set. FIG. 4 is a diagram illustrating an example of a method of setting the reference line L. The method of setting the reference line L may be a method other than that shown in FIG. 4.

When setting the reference line L, the tractor 1 is first moved to an appropriate location in the field (point A in the drawing), and the point A is registered. The point A is registered in accordance with instructions to resister the point A from the driver. The position of the vehicle body 2 obtained by the position acquisition unit 19 at a time when the instructions to register the point A is issued is registered as the position of the point A.

Once the point A is registered, the driver manually operates the tractor 1 to move forward up to a predetermined position (point B in the drawing). When tractor 1 reaches a predetermined position, the point B is registered. The point B is registered in accordance with instructions to resister the point B from the driver. The position of the vehicle body 2 obtained by the position acquisition unit 19 at a time when the instructions to register the point B is issued is registered as the position of the point B. Once the points A and B are registered, a straight line passing through the points A and B is set as the reference line L.

Once the reference line L is set, lines parallel to the reference line L are generated as autonomous traveling lines at predetermined intervals. During the automatic steering, steering control of the tractor 1 in a traveling direction thereof is performed so that the position of the vehicle body 2 obtained by the position acquisition unit 19 is on the autonomous traveling lines. The steering control of the tractor 1 in the traveling direction thereof is performed by controlling the motor 131.

### 2. Arrangement of Controller

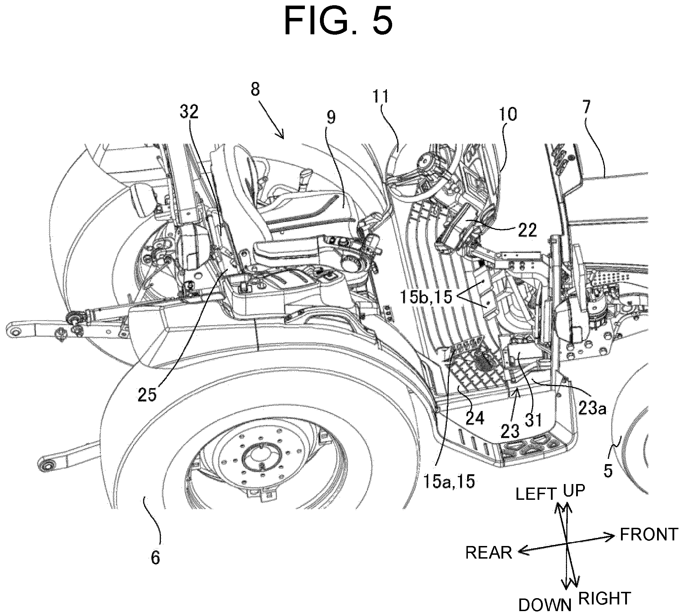

FIG. 5 is a schematically perspective view of a configuration around a cockpit 8 of the tractor 1. As shown in FIG. 5, the floor 23 of the cockpit 8 spreads out in front of the driver's seat 9. The first controller 31 is located on the floor 23. Namely, the tractor 1 has a controller 31 which controls the motor 131 and is located on the floor 23 in front of the driver's seat 9. This configuration makes it possible to prevent a driver's view from being obstructed by the controller 31 as well as to locate the controller 31 to control the motor 131 relatively close to the motor 131. Since the controller 31 is located in the vicinity of the motor 131 according to the present embodiment, this makes it easier to arrange wiring connecting the controller 31 to the motor 131, which is likely thick because large current flows to drive the motor 131, to the vehicle body 2. Namely, the controller 31 for the motor 131, which enables the automatic steering, can be appropriately located in the tractor 1.

The floor 23 includes a floor structure which constitutes a floor of the cockpit 8. The floor structure may include at least one frame member which serves as a framework of the floor and at least one panel member which constitutes a floor surface 23a. The frame member and panel member may be an integrally single member. The floor surface 23a is, for example, a top surface of a panel member which constitutes the floor structure. The floor surface 23a may be planar, concave, convex, or at least partially concave and/or convex. The floor surface 23a may also have an opening which penetrates it in the up-down direction.

Components located on the floor 23 may include not only the components located directly on the floor 23, but also components located indirectly on the floor 23. The indirectly located components may include a connecting member which connects the floor 23 to the controller 31 and is located between them. Such the configuration is described later.

In the present embodiment, the first controller 31 is located on the floor surface 23a. A floor cover (floor mat) 24 covers the floor surface 23a. The floor cover 24 is preferably fixed to the floor surface 23a without moving. The floor cover 24 is preferably made of a material such as rubber or resin other than metal. The floor cover 24 may not be provided. In the present embodiment, the floor cover 24 does not cover an area of the floor surface 23a where the first controller 31 is provided. Namely, there is no floor cover 24 on the first controller 31, so that the first controller 31 is located on the floor surface 23a without being covered by the floor cover 24. However, the first controller 31 may be located on the floor surface 23a with being covered by the floor cover.

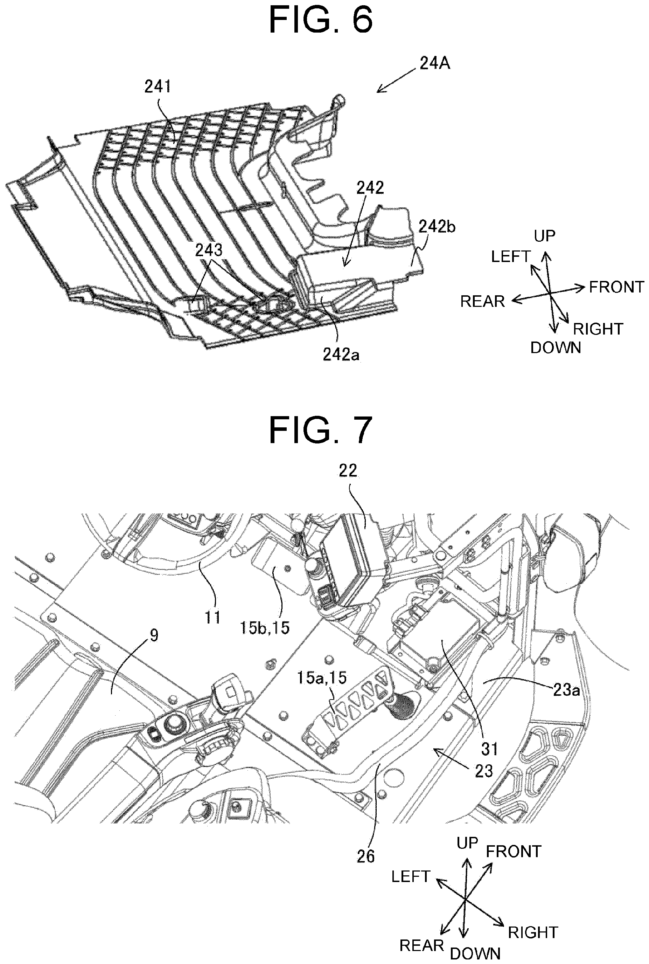

FIG. 6 is a schematically perspective view of a configuration of another embodiment of the floor cover 24A. The floor cover 24A has a flat floor cover 241 and a controller housing 242 provided at the front right side of the floor cover 241. The controller housing 242 has a top plate 242b and side walls 242a extending upwardly from the top surface of the floor cover 241. The controller housing 242 is in a box shape with opened downward and forward. The controller housing 242 is configured taking into account of a shape of an object to be housed and placement of the object in the cockpit 8. When the floor cover 24A is located on the floor surface 23a, the controller housing 242 covers the first controller 31 from above. This configuration allows the floor cover 24A to protect the first controller 31.

The floor cover 241 has an opening 243 for the accelerator pedal in order to protrude upward from the floor cover 24A a part of the accelerator pedal 15a located on the floor 23. This configuration can be similarly applied to the floor cover 24 according to the present embodiment (the floor cover uncovering the first controller 31).

FIG. 7 is an enlarged schematically perspective view around a first controller 31 illustrating a configuration with the floor cover 24 removed, Referring to FIGS. 2, 5 and 7, the arrangement of the first controller 31 in tractor 1 is described in more detail.

The first controller 31 is preferably located on one side in the left-right direction of the front panel 10 where the steering wheel 11 is located. One side in the left-right direction can also be referred to as one side in a width direction of a machine body. This configuration makes it possible to locate the first controller 31 in a position where the operation of pedals 15 located below the front panel 10, such as the brake pedal 15b, is less likely interfered with the first controller 31 This configuration also allows for effective use of an empty space in front of the cockpit 8. This configuration also makes it possible to shorten the wiring connecting the first controller 31 to the motor 131 by locating the first controller 31 near the motor 131.

In the present embodiment, the first controller 31 is located on the right side of the front panel 10. For example, if the accelerator pedal 15a provided on the floor 23 is positioned on the right side in the tractor 1, the components to obstruct getting in and out of the tractor 1 is likely positioned on the right side. Accordingly, the driver often gets in and out of the tractor 1 from the left side. For this reason, by placing the first controller 31 on the right side, it is possible to reduce the possibility that the first controller 31 interferes with the driver getting in and out of the tractor 1. In the tractor 1 according to the present embodiment, the driver can get in and out of the cockpit 8 from the right side as well as the left side. The first controller 31 may be located on the left side with respect to the front panel 10.

In the present embodiment, the first controller 31 is located in front of the accelerator pedal 15a provided on the floor 23. The accelerator pedal 15a is located on the floor 23 in right front of the driver's seat 9. The first controller 31 located in front of the accelerator pedal 15a is located at the right front end of the cockpit 8. This configuration makes it possible to locate the first controller 31 by effectively utilizing the empty space in front of the cockpit 8. The first controller 31 may be located below the brake pedal 15b, not limited to in front of the accelerator pedal 15a, for example. In this configuration, the first controller 31 may be located out of a working range of the brake pedal 15b.

In the present embodiment, the above-mentioned display 22 (see FIG. 3) is located on the right side of the front panel 10. Namely, the tractor 1 is equipped with the display 22 which is located on the same side of the front panel 10, where the steering wheel 11 is provided, as the first controller 31 in the left-right direction. The display 22 is the same in height as the steering wheel 11 in the up-down direction so as to easily view by the driver sitting on the driver's seat 9. For this reason, a space is likely to be caused below the display 22. Namely, according to the present embodiment, it is possible to locate the first controller 31 by effectively utilizing the space below the display 22. According to the present embodiment, since the display 22 and the first controller 31 can be located close to each other, this makes it easier to collectively locate in the same place the electrical wiring for connecting them to the second controller 32 described above (see FIG. 3, etc.).

In the present embodiment, the second controller 32 is located apart from the first controller 31. In detail, the second controller 32 is located in the rear of the driver's seat 9 (see FIG. 5). This configuration makes it possible to prevent a driver's view from being obstructed by the second controller 32 similar to the first controller 31. In detail, the second controller 32 is mounted on the support 25 to support the driver's seat 9. FIG. 5 shows the second controller 32 with a cover member (not shown) for covering the same removed. The cover member is not an essential component, but it is preferably provided.

As can be seen by comparing FIG. 5 with FIG. 7, the floor cover 24 covers a part of the wiring 26 which are arranged on the floor surface 23a. In detail, the wiring 26 is a wiring harness in which multiple wires are bundled together. The wiring 26 may be a cable. The wiring 26 includes a wire which electrically connects the first controller 31 to the second controller 32. The wiring 26 includes other wires which electrically connect the display 22 to the second controller 32. The wiring 26 includes a part of the wiring located in the rear of the driver's seat 9, a part of the wiring located on the right side of the driver's seat 9, a part of the wiring located at the right end of the floor 23, and a part of the wiring located at the front end of the floor 23.

As can be seen from the foregoing, the tractor 1 includes another controller 32 located apart from the controller 31, the wiring 26 having a wire connecting the controller 31 to another controller 32, and the floor cover 24 which is located on the floor 23 and covers the wiring 26. The floor cover 24 prevents the wiring 26 from being directly trampled on, thereby protecting the wiring 26. In a configuration where the controller 31 is located on one side in the left-right direction of the front panel 10, another controller 32 may be located on the other side in the left-right direction of the front panel 10. In an alternative example, the controller 31 and another controller 32 may be located on the same side in the left-right direction of the front panel 10. In these configurations, the wiring 26 may be located on the floor 23 and covered by the floor cover 24.

### 3. Mounting Structure for Controller

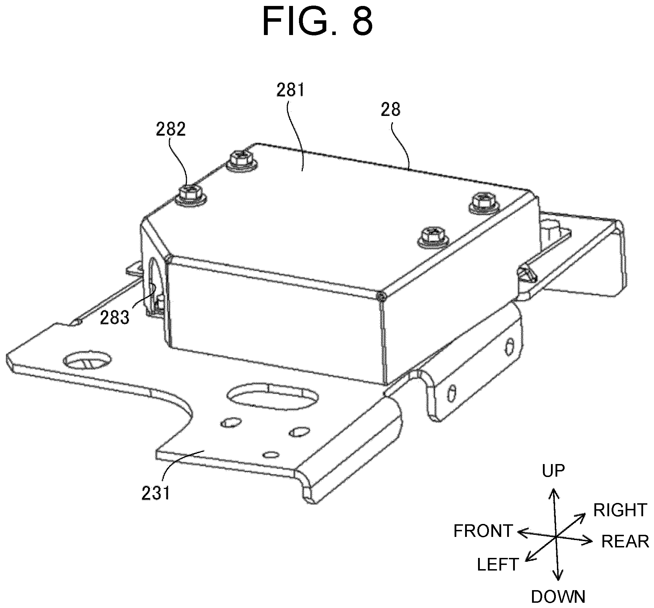

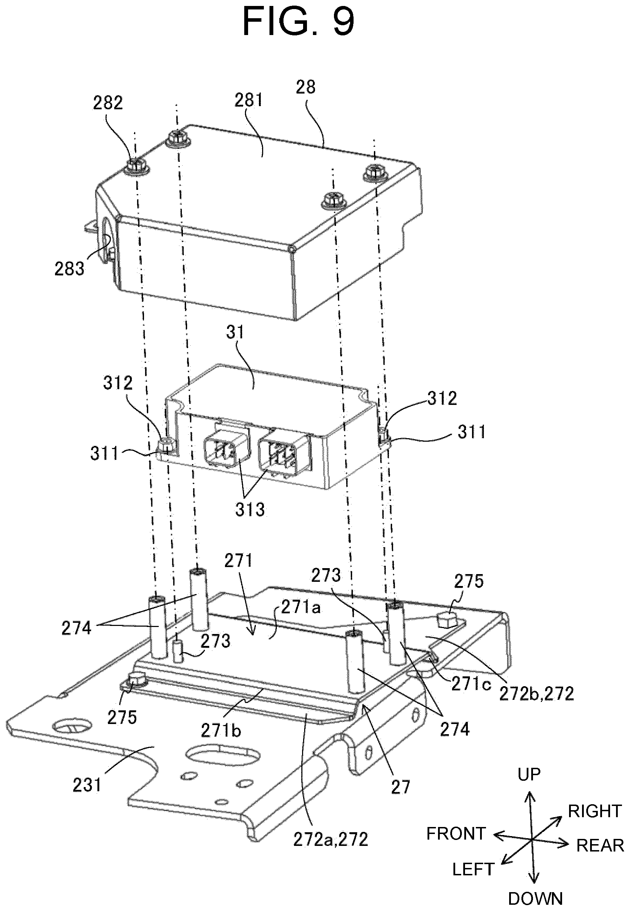

FIG. 8 is a schematically perspective view of a mounting structure for mounting the first controller 31 on the floor 23. FIG. 9 is an exploded schematically perspective view of a part of the configuration shown in FIG. 8. As shown in FIGS. 8 and 9, the first controller 31 is located on the floor 23 via a pedestal 27 which is located on a top surface of a floor panel 231 which constitutes the floor 23. The top surface of the floor panel 231 corresponds to the floor surface 23a. The first controller 31, which is located on the top surface of the floor panel 231 via the pedestal 27, is covered by the controller cover 28.

FIGS. 5 and 7 show the first controller with the controller cover 28 removed. The controller cover 28 may not be provided, but it is preferably provided.

The pedestal 27 is made by machining a sheet metal, for example. The pedestal 27 is a connecting member to connect the floor 23 to the first controller 31. Namely, in the present embodiment, the first controller 31 is located indirectly on the floor 23. The pedestal 27 has a pedestal body 271 and mounting members 272 located on the right and left sides of the pedestal body 271. The first controller 31 is located on the pedestal body 271. The mounting member 272 is attached to floor panel 231.

In detail, the pedestal body 271 has a body top plate 271a, a body left wall 271b, and a body right wall 271c. The body top plate 271a is in a rectangular shape which extends horizontally. The body left wall 271b extends diagonally left downward from a left end of the body top plate 271a. The body right wall 271c extends diagonally right downward from a right end of the body top plate 271a.

A left mounting member 272a is connected to a lower end of the body left wall 271b and extends from the lower end to the left side. The right mounting member 272b is connected to a lower end of the body right wall 271c and extends from the lower end to the right side. The left mounting member 272a and the right mounting member 272b are each in a plate shape which extends horizontally. The left mounting member 272a and the right mounting member 272b are secured to the floor panel 231 by screws 275, respectively.

Pillars for controller 273, which extend upwardly, are located on a left-front portion and a right-rear portion of the body top plate 271a. In the present embodiment, the pillar for controller 273 has a screw and extends upwardly through a hole provided in the body top plate 271a, which penetrates the body top plate 271a in the up-down direction. Tubular pillars for cover 274, which extend upwardly, are arranged at four corners of the body top plate 271a, respectively. The pillars for cover 274 are fixed to the body top plate 271a by screwing or welding, for example.

The first controller 31 is in a rectangular shape. The first controller 31 is located such an arrangement that a height in the up-down direction of the controller becomes the lowest. The first controller 31 is located such an arrangement that a height in the up-down direction of the controller becomes the lowest, thereby preventing the driver's view from being obstructed by locating the first controller 31 when the driver confirms a diagonally front downward view. In addition, this makes it possible to reduce decrease of the operability of the pedal 15 such as the brake pedal 15b by locating the first controller 31. However, the first controller 31 may be located such an arrangement other than the arrangement that a height in the up-down direction of the controller becomes the lowest.

Screw stops 311 are respectively provided at a left front corner and a right rear corner of the first controller 31 to be located on the floor 23. The screw stop 311 has a through hole which penetrates itself in the up-down direction. The first controller 31 is located on the body top plate 271a of the pedestal 27 with the pillars for controller 273 respectively passing through the through holes of the screw stops 311. In this state, the first controller 31 is secured to the pedestal 27 by fitting a nut 312 to the pillar for controller 273 which has a screw.

The controller cover 28 is in a box shape with opened downwardly. The controller cover 28 is made by machining a sheet metal, for example. A cover top plate 281 of the controller cover 28 has four through holes which penetrate itself in the up-down direction. The four through holes are located in positions where the four through holes are respectively aligned with the pillars for cover 274 in the up-down direction when the controller cover 28 covers the first controller 31. Screws 282 are put into the four through holes, passed through the tubular pillars for cover 274, and screwed to nuts (not shown) located on a backside of the body top plate 271a. This allows the controller cover 28 to be fixed to the pedestal 27. As can be seen from the above description, in the present embodiment, the pillar for cover 274 is fixed to the body top plate 271a by screwing.

The pedestal 27 is fixed to the floor panel 231, and thus the controller cover 28 is fixed to the floor 23. Namely, the tractor 1 is provided with the controller cover 28 which is fixed to the floor 23 and covers the controller 31. The controller cover 28 can protect the first controller 31.

As mentioned above, the floor cover 24A may be located above the first controller 31. In such a configuration, the first controller 31 may be covered by the controller cover 28 as well as by the floor cover 24A which is located above the controller cover 28.

The controller cover 28 is provided with an opening for wiring 283 through which the wiring 26 leads to a connector 313 provided in the first controller 31. In detail, the opening for wiring 283 is provided at the left front side on the side wall of the controller cover 28. The position where the opening for wiring 283 is provided is not limited to the position in the present embodiment, but may be changed as appropriate. Since the opening for wiring 283 is provided at the position in the present embodiment, this makes it easier to place the wiring 26 along the frame member, so that decrease of the visibility by the wiring 26 can be reduced. The connector 313 is provided on the left side of the first controller 31. In detail, the connector 313 includes two connectors, one for the second controller 32 and the other for the motor 131. The arrangement of the connector 313 may be changed as appropriate.

### 4. Alternative Embodiment

### 4-1. First Alternative Embodiment

The above mentioned location of the first controller 31 is illustrative only. The first controller 31 may be located at another position where it does not obstruct the driver's view and does not interfere with driving operations.

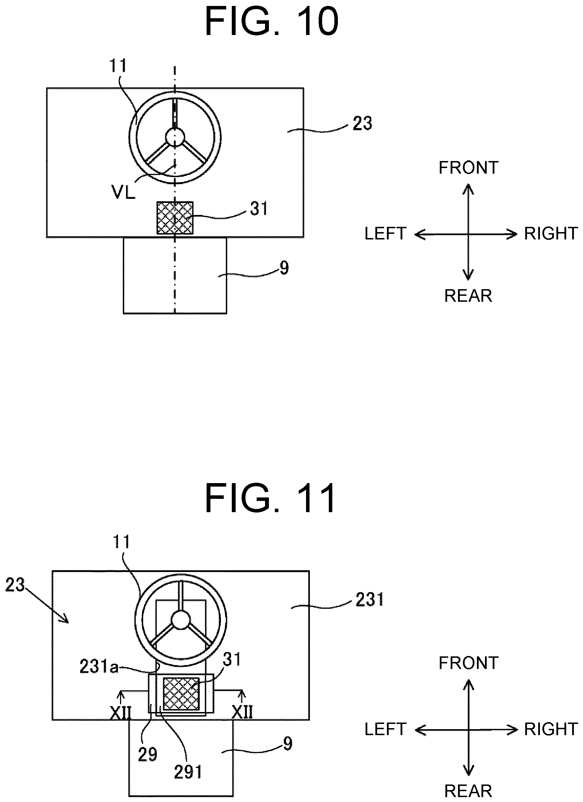

FIG. 10 is an explanatory diagram of a mounting location of the first controller 31 according to a first alternative embodiment. As shown in FIG. 10, the first controller 31 located on the floor 23 may be positioned on a virtual line VL which passes a center of the driver's seat 9 in the left-right direction and extends in the front-rear direction as viewed from above. In this case, the first controller 31 is preferably located on the rear side of the floor 23 close to the driver's seat 9. By a configuration locating the first controller 31 in such a position, the first controller 31 can be located between left and right legs of the driver sitting on the driver's seat 9. This prevents the first controller 31 from obstructing the view of the driver or interfering with the driving operations.

### 4-2. Second Alternative Embodiment

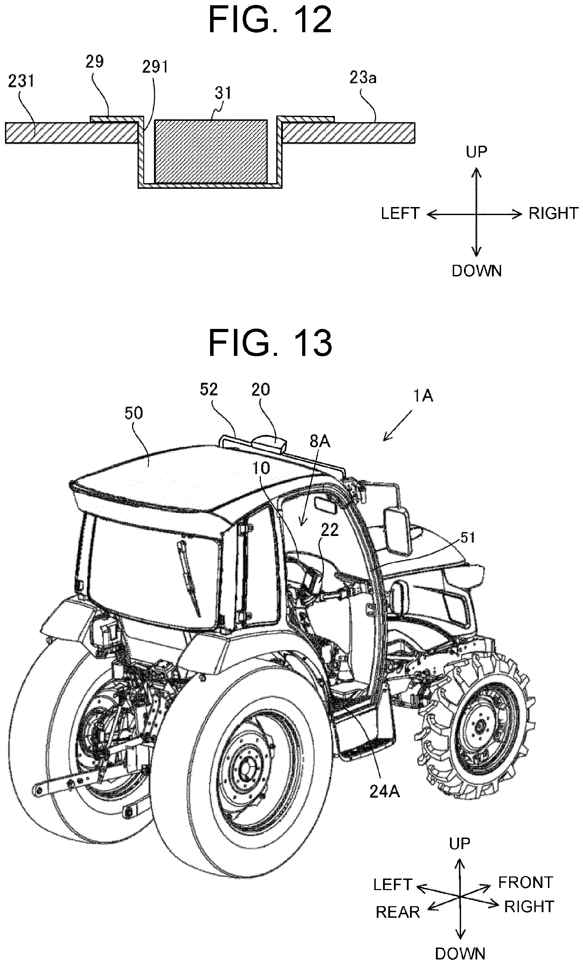

FIG. 11 is an explanatory diagram of a mounting location of the first controller 31 according to a second alternative embodiment. FIG. 12 is schematically cross sectional view taken along line XII-XII shown in FIG. 11. In the second alternative embodiment, an opening 231a is provided in the floor panel 231 constituting the floor 23, which penetrates the floor panel in the up-down direction. In the example shown in FIG. 11, the opening 231a is provided in the center in the left-right direction of the floor 23, but the position where the opening 231a is provided may be changed as appropriate.

In the present alternative embodiment, the first controller 31 is located at a position where the first controller 31 overlaps the opening 231a as viewed from above. In detail, the first controller 31 is mounted on a bracket 29. The bracket 29 is positioned so as to bridge a left edge portion and a right edge portion of the floor panel 231 over the opening 231a. The bracket 29 is a connecting member which connects the floor 23 to the first controller 31.

The bracket 29 may be flat, but in the present alternative embodiment, the bracket 29 has a groove 291 which is recessed downwardly. The first controller 31 is placed at the bottom of the groove 291. This configuration allows at least part of the first controller 31 to be located lower than the floor surface 23a. As a configuration in which at least a portion of the first controller 31 is located lower than the floor surface 23a, by providing a recess which is recessed downwardly in the floor surface 23a, the first controller 31 may be placed within the recess.

### 4-3. Third Alternative Embodiment

FIG. 13 is a perspective view of the tractor 1A with a cabin specification. The configuration associated with the first controller 31 and the second controller 32 described above can be applied to the tractor 1A with a cabin specification. In the tractor 1A, a cabin 50 is provided in the cockpit 8A which includes the driver's seat 9 and the front panel 10. The cabin 50 covers the driver's seat 9 and the front panel 10. In the tractor 1A with a cabin specification, the positioning antenna 20 is mounted on the front upper portion of the cabin 50 via a support frame 52, for example. The configuration of the driver's seat 9 and the front panel 10 in the cockpit 8A of tractor 1A is the same as that of tractor 1 described above. FIG. 13 shows the tractor 1A with the right side door of the cabin 50 being removed.

The tractor 1A is equipped with the floor cover 24A shown in FIG. 6. The first controller 31 located on the floor 23 is located under the floor cover 24A with covered by the controller cover 28.

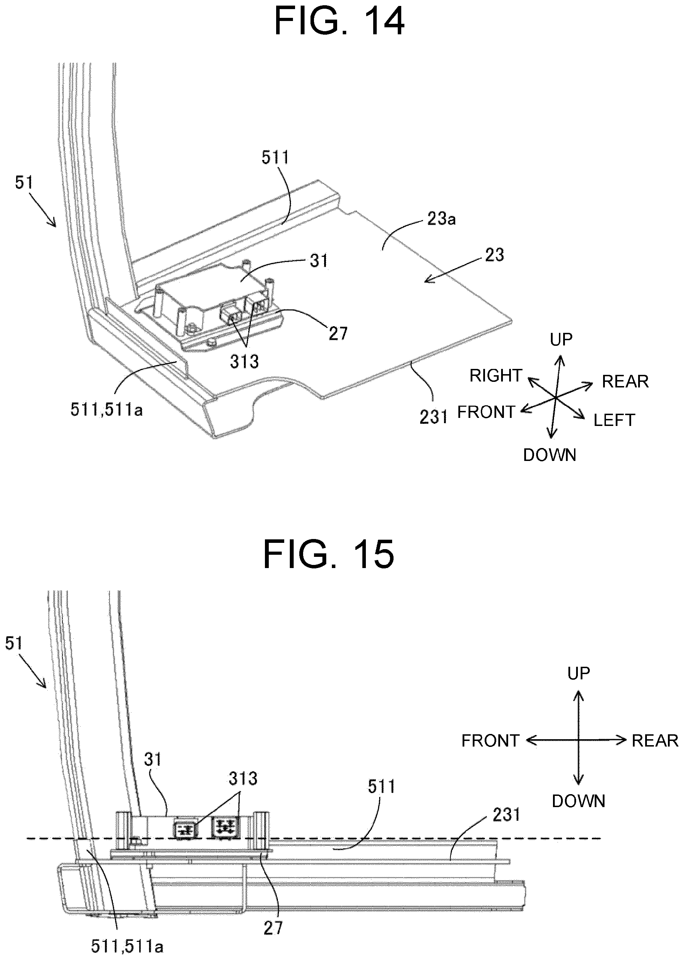

FIG. 14 is a schematically perspective view of a configuration around the first controller 31 of the tractor 1A with the cabin specification. FIG. 15 is a schematically side view of a configuration around the first controller 31 of the tractor 1A with the cabin specification. In FIGS. 14 and 15, the controller cover 28 which covers the first controller 31 and the floor cover 24A which is located on the floor surface 23a are omitted. Similar to the embodiment described above, the first controller 31 is located on the pedestal 27 which is fixed to the floor panel 231. The first controller 31 is located at the right front portion of the floor 23 of the cockpit 8A which is composed of the cabin 50.

The tractor 1A is equipped with a cabin frame 51 which constitutes the cabin 50. As the cabin frame 51 is provided, a wall 511 extending upwardly from the floor surface 23a is located at the outer edge of the floor 23. Namely, the tractor 1A has the wall 511 which is located at the outer edge of the floor 23 and extends upwardly. The tractor 1A is also equipped with the connector 313 provided with the controller 31.

As the walls 511 are provided, the tractor 1A with the cabin specification likely accumulates water in the cabin 50. Taking account of this point, the connector 313 is positioned higher than the top of the wall 511. A broken line in FIG. 15 indicates the lower end of connector 313. In a configuration in which a height of the wall 511 is not constant, the connector 313 may be positioned at a position higher than at least a top end of the lowest height portion of the wall 511. This configuration makes it possible to prevent the connector 313 from submerging due to water accumulated in the cabin 50.

On the other hand, if the height of the pedestal 27 is excessively raised to increase the height of the connector 313, the diagonally front downward seen from the driver's seat 9 may be obstructed by the first controller 31 to be narrowed. Therefore, it is preferable that at least part of the first controller 31 overlaps the cabin frame 51 (front wall portion 511a in the present embodiment) which is located in front of the cabin 50 as viewed from in front of the tractor. This makes it possible to reduce the amount of view which is obstructed by the first controller 31 when the driver sees the diagonally front downward from the driver's seat 9.

### 4-4. Fourth Alternative Embodiment

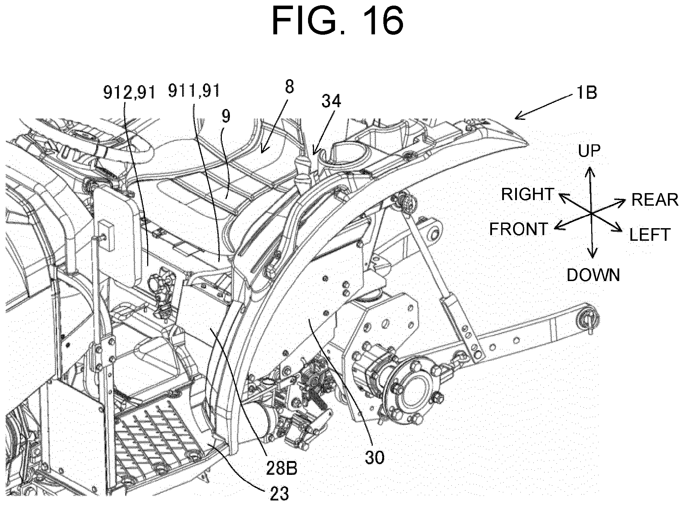

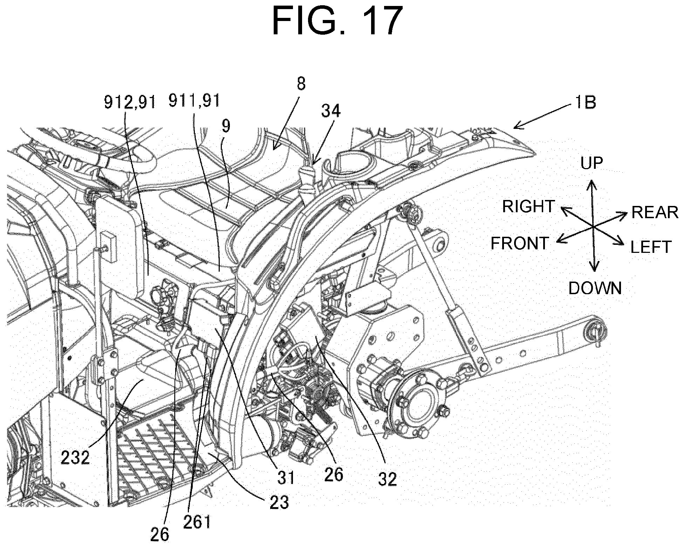

A fourth alternative embodiment is a configuration suitable for a small work vehicle, but not limited thereto. FIG. 16 is a schematically perspective view of the tractor 1B according to the fourth alternative embodiment. FIG. 16 shows an extracted part of components which constitute the tractor 1B. FIG. 17 is a diagram with a part of components (cover) removed from FIG. 16. The tractor 1B in the present alternative embodiment is a tractor with a ROPS specification. However, the configuration of the present alternative embodiment can be applied to the tractor with a cabin specification.

The tractor 1B in the present alternative embodiment is equipped with a first controller 31 (controller) to control the motor 131 (see FIG. 3) which rotates the steering shaft 13 (see FIG. 17). The first controller 31 is covered by the first controller cover 28B (see FIG. 16). The first controller 31 is located below the driver's seat 9. The first controller 31 is located at a partition which constitutes the cockpit 8 where the driver gets. Such a configuration is the same as the configuration according to the embodiment described above. This configuration makes it possible to prevent the driver's view from being obstructed by the first controller 31 as well as to locate the first controller 31 to control the motor 131 relatively close to the motor 131. Namely, the controller 31 for the motor 131, which enables the automatic steering, can be appropriately located in the tractor 1.

The partition constitutes a space for the driver (cockpit space) to get in the tractor 1B. The partition is a member which constitutes a bottom of the cockpit space or a member which constitutes a side of the cockpit space, for example. The partition is a bottom plate or a side wall, for example. In the embodiment described above, the partition where the first controller 31 is located is the floor 23 in front of the driver's seat 9. In the present embodiment, the partition where the first controller 31 is located is a member separate from the floor 23.

In the present embodiment, the partition is a seat support frame 91 which supports the driver's seat 9. Namely, the first controller 31 is located on the seat support frame 91 which supports the driver's seat 9. The configurations in which the first controller 31 is located on the seat support frame 91 may include not only a configuration in which the first controller 31 is located directly on the seat support frame 91, but also a configuration in which the first controller 31 is located indirectly on the seat support frame 91. In the configuration in which the first controller 31 is located on the seat support frame 91, the first controller 31 can be located in a position where the first controller 31 is less obstructive for drivers getting in and out of the tractor 1B. In addition, the first controller 31 can be located in a position which is less likely to interfere with pedal operation.

As shown in FIGS. 16 and 17, the seat support frame 91 has a first frame section 911 and a second frame section 912. The first frame section 911 is located above the floor 23 in front of the driver's seat 9 and constitutes a surface on which the driver's seat 9 is mounted. The first frame section 911 is located below the driver's seat 9 and extends horizontally. The second frame section 912 connects a front end of the first frame section 911 to the floor 23. The second frame section 912 constitutes a front wall of the seat support frame 91. The first frame section 911 and the second frame section 912 may be made of the same material or of different materials.

In detail, the first controller 31 is located in the second frame section 912. The first controller 31 is located in a front surface of the second frame section 912. The front surface may be planar, concave, convex, or at least partially concave and/or convex. The front surface may also include an opening which penetrates the second frame in the front-rear direction. The first controller 31 may be located in a recess or the opening. In the present embodiment, it is preferred that the first controller 31 is located on one side in the left-right direction of the front surface of the second frame section 912. In detail, the first controller 31 is located on the left side of the front surface of the second frame section 912. According to such the configuration, the first controller 31 can be positioned behind the calf of the driver sitting on the driver's seat 9, so that the first controller 31 can be located in a position where it does not interfere with pedal operation, etc. In addition, since the first controller 31 can be located behind the driver's legs, thereby utilizing a larger foot space for the driver. According to the configuration of the present embodiment, in the case where the tractor is of a cabin specification, the first controller 31 can be located in an interior of the cabin.

Similar to the embodiment described above, the first controller 31 is electrically connected to the motor 131 by the wire 261. The wire 261 is included in the wiring 26 (wire harness) which is a bundle of multiple wires and leads from the first controller 31 to the motor 131 through under the floor cover 232 which is located in the center of floor 23. The floor cover 232 consists of a plastic member which covers an opening (not shown) provided in the center of the floor 23.

Similar to the embodiment described above, in the present embodiment, the tractor 1B is also equipped with a second controller 32 which is the main controller which performs control associated with the automatic steering. The second controller 32 is located apart from the first controller 31 and is electrically connected to the first controller 31 by the wires contained in the wiring 26. Namely, in the present embodiment, the tractor 1B is also equipped with another controller 32 which is located apart from the controller 31. The tractor 1B is equipped with another controller 32 which is electrically connected to controller 31.

In the embodiment described above, the second controller 32 is located behind the driver's seat 9, but the present embodiment has a different configuration. As shown in FIG. 17, in the present embodiment, the second controller 32 is located on one side in the left-right direction of the tractor 1B. In detail, the second controller 32 is located on the left side of tractor 1B. As can be seen by comparing FIG. 16 and FIG. 17, the second controller 32 is covered by a side cover 30 which is described below.

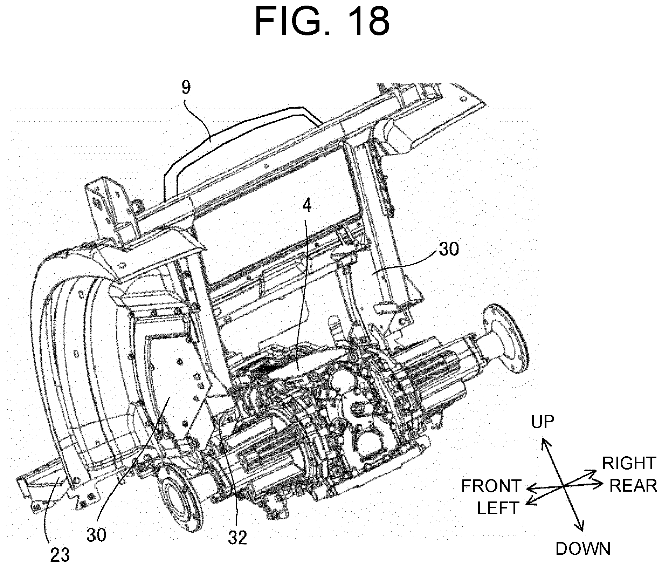

FIG. 18 is an explanatory diagram of a mounting location of the second controller 32 according to the fourth alternative embodiment.

FIG. 18 is a schematically perspective view showing an extracted part of components of the tractor 1B. As shown in FIG. 18, the tractor 1B has the drive housing 4 which is located below the driver's seat 9. The tractor 1B is also equipped with the side covers 30 which are located on at least one of the left and right sides of the drive housing 4. In the present embodiment, the side covers 30 are located on both sides of the drive housing 4. The drive housing 4 is positioned between a pair of side covers 30 on each side in the left-right direction. The left and right side covers 30 are detachably provided on the side frames of the tractor 1B. The side covers 30 are positioned inward from the rear wheels 6 in the left-right direction (see FIG. 1, etc.). In detail, the left side cover 30 is located on the right side with respect to the left rear wheel 6. The right side cover 30 is located on the left side with respect to the right rear wheel 6.

In the present embodiment, the second controller 32 is located between the left side cover 30 and the drive housing 4 in the left-right direction. The second controller 32 may be located between the right side cover 30 and the drive housing 4 in the left-right direction. Namely, the second controller 32 (another controller) may be located between the side cover 30 on either left side or right side and the drive housing 4. This configuration makes it possible to locate the second controller 32 using an empty space in the tractor 1B. This configuration also makes it possible to locate the second controller 32 in a position where the second controller 32 is less thermally effected.

In the present embodiment configuration, the second controller 32 is preferably located on the same side as the first controller 31 in the left-right direction of the tractor 1B. This configuration can prevent the wiring connecting the first controller and the second controller from becoming unnecessarily long.

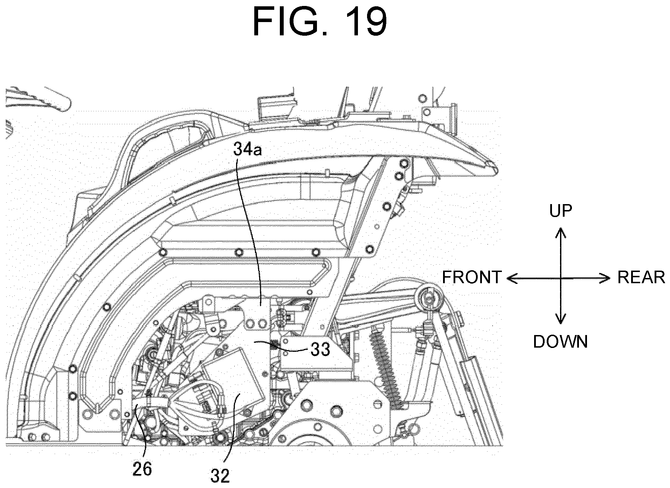

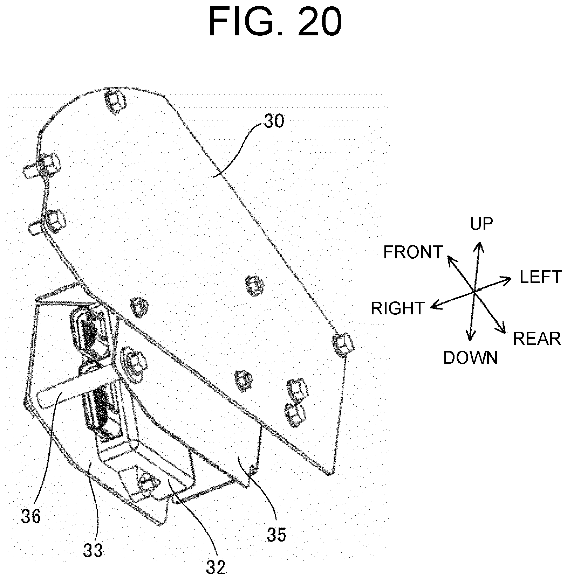

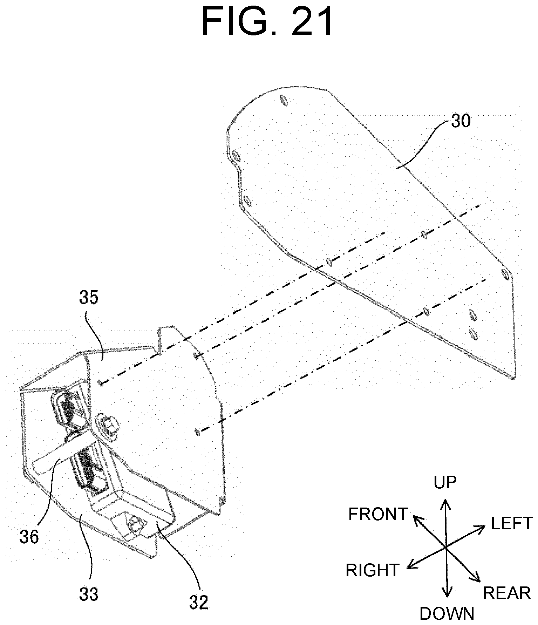

Next, the mounting structure of the second controller 32 in the tractor 1B is explained with reference to FIGS. 19 through 21. FIG. 19 is an enlarged plan view around the second controller 32 of the tractor 1B according to the fourth alternative embodiment. FIG. 20 is a schematically perspective view of the mounting structure of the second controller 32 of the tractor 1B according to the fourth alternative embodiment. FIG. 21 is an exploded perspective view of a part of the mounting structure shown in FIG. 20.

As shown in FIG. 19, the second controller 32 is fixed to a controller support plate 33. In the present embodiment, fixing the second controller 32 to the controller support plate 33 is carried out using bolts and nuts. However, fixing tools other than bolts and nuts may be used. It can be also applied to the fixing portions described below. In the present embodiment, the controller support plate 33 is a flat plate member. The controller support plate 33 is fixed to a member 34a which constitutes a lever unit 34 (see FIG. 16, etc.). Fixing the controller support plate 33 to the member 34a is carried out using bolts and nuts. The controller support plate 33 is fixed to the member 34a which constitutes the lever unit 34 in such a posture that a surface to which the second controller 32 is fixed extends in a vertically direction. The controller support plate 33 is fixed to the member 34a whose top constitutes the lever unit 34.

In this configuration, during operations such as maintenance and the like, the controller support plate 33 to which the second controller 32 is attached can be removed from the vehicle body of the tractor 1B together with the lever unit 34. This configuration allows the second controller 32 to be removed from the tractor's vehicle body together with the floor unit. The configuration, in which the wiring can be removed from the vehicle body together with the floor unit, makes it possible to improve the workability. In the present embodiment, the lever unit 34 includes a transmission switching lever, but the lever unit 34 may include a lever other than the transmission switching lever. The member to which the controller support plate 33 is fixed may be a member other than the lever unit 34, as long as the member can be removed integrally with the floor unit. The floor unit refers to a structural unit (lump) in which a plurality of components including components constituting the floor 23, the driver's seat 9, the operation system, and the like are integrally configured.

As mentioned above, the second controller 32 is configured to be covered by the side cover 30. In detail, as shown in FIGS. 20 and 21, a semi-box-shaped inner cover 35 is attached to an inner side surface (the right side surface in the present embodiment) of the side cover 30 in the left-right direction. In the present embodiment, the inner cover 35 is fixed to the side cover 30 by using bolts and nuts in three places. According to this configuration, by fixing the side cover 30 with the inner cover 35 being attached to the frame of the vehicle body, the inner cover 35 can house the second controller 32. In detail, in the present embodiment, the inner cover 35 covers the top surface, the rear surface, and the left side of the rectangular-shaped second controller 32.

In the present embodiment, the inner cover 35 is fastened to the controller support plate 33 with bolts and nuts. The bolt passes through a column 36 which is located between the inner cover 35 and the controller support plate 33 in the left-right direction to be screwed to a nut. As a result, a top portion of the controller support plate 33 is fixed to the member 34a which constitutes the lever unit 34 and a bottom portion of the controller support plate 33 is fixed to the inner cover 35. This structure makes it possible to decrease a jolt of the controller support plate 33.

In the configuration mentioned above, the side cover 30 is separate from the inner cover 35, but it is not limited thereto. The side cover 30 and the inner cover 35 may be configured as one component.

### 5. Notes, etc.

The various technical features disclosed in the present specification can be modified in various ways without departing from the gist of the technical creation thereof. Further, the multiple embodiments and modified examples shown in the present specification may be combined to the extent possible.

### 6. Appendix

An exemplary work vehicle of the present disclosure may be configured to include: a driver's seat; a steering wheel located in front of the driver's seat; a steering shaft connected to the steering wheel; a motor to rotate the steering shaft; and a controller to control the motor, wherein the controller is located on a partition below the driver's seat that constitutes a cockpit in which a driver gets (first configuration).

In the first configuration mentioned above, the controller may be configured to be located on the floor in front of the driver's seat (second configuration).

In the second configuration mentioned above, the controller may be configured to be located on one side in the left-right direction of the front panel with which the steering wheel is equipped (third configuration).

The third configuration mentioned above, the work vehicle may be configured to further include another controller located apart from the controller, wherein the other controller is located on the other side in the left-right direction of the front panel. (fourth configuration).

The third or fourth configuration mentioned above, the work vehicle may be configured to further include a display located on the same side as the controller in the left-right direction of the front panel. (fifth configuration).

In any one of the second to fifth configurations mentioned above, the controller may be configured to be located such an arrangement that a height in an up-down direction of the controller becomes the lowest (sixth configuration).

In any one of the second to sixth configurations mentioned above, the controller may be configured to be located in front of an accelerator pedal mounted on the floor (seventh configuration).

In any one of the second to seventh configurations mentioned above, the work vehicle may be configured to further include a controller cover fixed to the floor to cover the controller (eighth configuration).

In any one of the second to eighth configurations mentioned above, the work vehicle may be configured to further include: another controller located apart from the controller; wiring including a wire to connect the controller to the other controller; and a floor cover located on the floor to cover the wiring (ninth configuration).

In any one of the second to ninth configurations mentioned above, the work vehicle may be configured to further include: a wall that is located at an outer edge of the floor and extends upwardly; and a connector that is provided in the controller, wherein the connector is located at a position higher than an upper end of the wall (tenth configuration).

In the first configuration mentioned above, the controller may be configured to be located on the seat support frame that supports the driver's seat (eleventh configuration).

In the eleventh configuration mentioned above, the seat support frame may be configured to include a first frame that is located above the floor in front of the driver's seat and constitutes a surface on which the driver's seat is mounted; and a second frame to connect a front end of the first frame to the floor, wherein the controller is located on the second frame (twelfth configuration).

In the eleventh or twelfth configuration mentioned above, the work vehicle may be configured to further include: a drive housing located below the driver's seat; a side cover located on at least one of left and right sides of the drive housing; and another controller located apart from the controller, wherein the other controller is located between the side cover and the drive housing (thirteenth configuration).

### REFERENCE SIGNS LIST

1, 1A, 1B Tractor (work vehicle)
4 Drive housing
8 Cockpit
9 Driver's seat
10 Front panel
11 Steering wheel
13 Steering shaft
15a Accelerator pedal
22 Display
23 Floor (partition)
24, 24A Floor cover
26 Wiring
28 Controller cover
30 Side cover
31 First controller (controller)
32 Second controller (another controller)
91 Seat support frame (partition)
131 Motor
313 Connector
511 Wall
911 First frame section
912 Second frame section

## Claims

1. A work vehicle comprising:
a driver's seat;
a steering wheel located in front of the driver's seat;
a steering shaft connected to the steering wheel;
a motor to rotate the steering shaft; and
a controller to control the motor,
wherein the controller is located on a partition below the driver's seat that constitutes a cockpit in which a driver gets.

2. The work vehicle according to claim 1, wherein the controller is located on a floor in front of the driver's seat.

3. The work vehicle according to claim 2, wherein the controller is located on one side in a left-right direction of a front panel to be equipped with the steering wheel.

4. The work vehicle according to claim 3 further comprising another controller located apart from the controller,
wherein the other controller is located on the other side in the left-right direction of the front panel.

5. The work vehicle according to claim 3 or 4 further comprising a display located on the same side as the controller in the left-right direction of the front panel.

6. The work vehicle according to claim 2, wherein the controller is located in such an arrangement that a height in an up-down direction of the controller becomes the lowest.

7. The work vehicle according to claim 2, wherein the controller is located in front of an accelerator pedal mounted on the floor.

8. The work vehicle according to claim 2 further comprising a controller cover fixed to the floor to cover the controller.

9. The work vehicle according to claim 2 further comprising:
another controller located apart from the controller;
wiring including a wire to connect the controller to the other controller; and
a floor cover located on the floor to cover the wiring.

10. The work vehicle according to claim 2 further comprising:
a wall that is located at an outer edge of the floor and extends upwardly; and
a connector that is provided in the controller,
wherein the connector is located at a position higher than an upper end of the wall.

11. The work vehicle according to claim 1, wherein the controller is located on a seat support frame that supports the driver's seat.

12. The work vehicle according to claim 11, wherein
the seat support frame includes:
a first frame that is located above the floor in front of the driver's seat and constitutes a surface on which the driver's seat is mounted; and
a second frame to connect a front end of the first frame to the floor,
wherein the controller is located on the second frame.

13. The work vehicle according to claim 11 or 12 further comprising:
a drive housing located below the driver's seat;
a side cover located on at least one of left and right sides of the drive housing; and
another controller located apart from the controller,
wherein the other controller is located between the side cover and the drive housing.
